# EUROPEAN PATENT APPLICATION

(11) **EP 1 585 292 A1**
(43) Date of publication of application: **12.10.2005**
(21) Application number: 04104865.3
(22) Date of filing: 04.10.2004
(51) Int. Cl.: H04M 1/60, H04M 1/725, H04M 19/04

(54) **Automatic audio intensity adjustment of a mobile communications device**

(71) Applicant: Research In Motion Limited, Waterloo, Ontario N2L 3W8 (CA)
(72) Inventor: Lowles, Robert James, N2L 3W8, Waterloo, (CA)
(74) Representative: Rickard, David John

(57) **Abstract**

The volume, or audio intensity, of audio output from a mobile communication device may be selected based on a detected state of the environment of the mobile communication device.

## Description

The present invention relates to mobile communication devices and, more particularly, to automatic audio intensity adjustment for such devices.

In the realm of mobile communication devices that includes pagers, cellular telephones, personal digital assistants (PDAs), wireless handheld e-mail handlers and combinations of the foregoing, so-called hands-free operation is often a significant feature. Whether through a wired or wireless connection, a user of a given one of these devices, especially where the given device is configured as a phone, may listen and talk without having to hold the device at head level.

Beyond the hands-free operation there are many other ways for a mobile communication device to generate audio. In noisy environments, the user may configure the mobile communication device to generate audio with greater intensity than normal, so that the user may hear the audio over the noise of the environment. However, if the notification occurs while the user holds the mobile communication device at head level, high intensity audio generation may cause the user aural discomfort.

### SUMMARY

The volume, or audio intensity, of audio output from a mobile communication device may be selected based on a determined state of an aspect of the environment of the mobile communication device.

In accordance with an aspect of the present invention there is provided a mobile communication device including an audio output device, a sensor system for detecting a state of an environment of the communication device from among at least two states and an adjustment system for selecting an intensity of output for the audio output device based on the state detected by the sensor.

In accordance with another aspect of the present invention there is provided a method of automatically adjusting intensity of output for an audio output device of a mobile communication device. The method includes determining a state of an environment of the mobile communication device and, based on the determining, selecting an intensity of output for the audio output device. In another aspect, a computer readable medium is provided to allow a processor to carry out this method.

In accordance with a further aspect of the present invention there is provided a mobile communication device including an audio output device, a sensor system for detecting a level of an aspect of an environment of the communication device and an adjustment system for selecting an intensity of output for the audio output device based on the level detected by the sensor.

In accordance with a still further aspect of the present invention there is provided a method of setting an intensity of output for an audio output device of a mobile communication device. The method includes detecting a level of an aspect of an environment of the communication device and selecting an intensity of output for the audio output device based on the level detected by the sensor. In yet another aspect, a computer readable medium is provided to allow a processor to carry out this method.

Other aspects and features of the present invention will become apparent to those of ordinary skill in the art upon review of the following description of specific embodiments of the invention in conjunction with the accompanying figures.

### BRIEF DESCRIPTION OF THE DRAWINGS

In the figures which illustrate an example embodiment of this invention:

FIG. 1 illustrates a mobile communication device according to an embodiment of the present invention; and

FIG. 2 illustrates steps of a method of automatically adjusting audio intensity on an audio output device of the mobile communication device of FIG. 1, according to an embodiment of the present invention.

### DETAILED DESCRIPTION

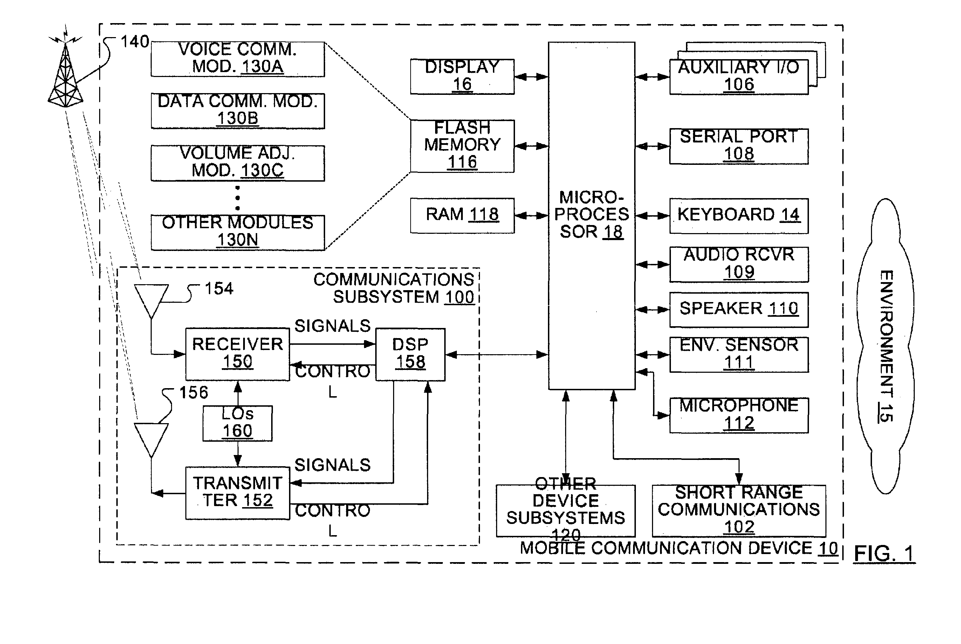

FIG. 1 illustrates a hand-held mobile communication device 10 including a housing, an input device (a keyboard 14), and an output device (a display 16), which is preferably a full graphic Liquid Crystal Display (LCD). Other types of output devices may alternatively be utilized. A processing device (a microprocessor 18) is shown schematically in FIG. 1 as coupled between the keyboard 14 and the display 16. The microprocessor 18 controls the operation of the display 16, as well as the overall operation of the mobile device 10, in response to actuation of keys on the keyboard 14 by a user. An aspect of the environment 15 of the hand-held mobile communication device 10 is also schematically illustrated.

As will be understood by those skilled in the art, the processing device, rather than being the microprocessor, may be, among other possibilities, a field programmable gate array (FPGA) or other controller such as a reduced instruction set computer (RISC) processor.

The housing may be elongated vertically, or may take on other sizes and shapes (including clamshell housing structures). The keyboard may include a mode selection key, or other hardware or software for switching between text entry and telephony entry.

In addition to the microprocessor 18, other parts of the mobile device 10 are shown schematically in FIG. 1. These include: a communications subsystem 100; a short-range communications subsystem 102; the keyboard 14 and the display 16, along with other input/output devices including a set of auxiliary I/O devices 106, a serial port 108, an audio receiver 109 (for being held to the ear), a speaker 110 (for loud audio), an environment sensor 111 and a microphone 112; as well as memory devices including a flash memory 116 and a Random Access Memory (RAM) 118; and various other device subsystems 120. The mobile device 10 is preferably a two-way radio frequency (RF) communication device having voice and data communication capabilities. In addition, the mobile device 10 preferably has the capability to communicate with other computer systems via the Internet.

Operating system software executed by the microprocessor 18 is preferably stored in a persistent store, such as the flash memory 116, but may be stored in other types of memory devices, such as a read only memory (ROM) or similar storage element. In addition, system software, specific device applications, or parts thereof, may be temporarily loaded into a volatile store, such as the RAM 118. Communication signals received by the mobile device may also be stored to the RAM 118.

The microprocessor 18, in addition to its operating system functions, enables execution of software applications on the mobile device 10. A predetermined set of software applications that control basic device operations, such as a voice communications module 130A and a data communications module 130B, may be installed on the mobile device 10 during manufacture. An automatic volume adjustment module 130C may also be installed on the mobile device 10 during manufacture, to implement aspects of the present invention. As well, additional software modules, illustrated as an other software module 130N, which may be, for instance, a personal information manager (PIM) application, may be installed during manufacture. The PIM application is preferably capable of organizing and managing data items, such as e-mail, calendar events, voice mails, appointments, and task items. The PIM application is also preferably capable of sending and receiving data items via a wireless network, of which an exemplary base station 140 is illustrated. Preferably, the data items managed by the PIM application are seamlessly integrated, synchronized and updated via the wireless network with the device user's corresponding data items stored or associated with a host computer system.

Known wireless networks, of which the wireless network is exemplary, allow for communication using a medium, which may be, for instance, electromagnetic or acoustic. Further, electromagnetic communication media include radio frequency, optical and infrared.

Communication functions, including data and voice communications, are performed through the communication subsystem 100, and possibly through the short-range communications subsystem 102. The communication subsystem 100 includes a receiver 150, a transmitter 152 and one or more antennas, illustrated as a receive antenna 154 and a transmit antenna 156. In addition, the communication subsystem 100 also includes a processing module, such as a digital signal processor (DSP) 158, and local oscillators (LOs) 160. The specific design and implementation of the communication subsystem 100 is dependent upon the communication network in which the mobile device 10 is intended to operate. For example, the communication subsystem 100 of the mobile device 10 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 10.

Network access requirements vary depending upon the type of communication system. For example, in the Mobitex™ and DataTAC™ networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the mobile device 10 may send and receive communication signals over the wireless communication network of which the base station 140 is a part. Signals received from the base station 140 by the receive antenna 154 are routed to the receiver 150, which provides for signal amplification, frequency down conversion, filtering, channel selection, etc., and may also provide analog to digital conversion. Analog-to-digital conversion of the received signal allows the DSP 158 to perform more complex communication functions, such as demodulation and decoding. In a similar manner, signals to be transmitted to the base station 140 are processed (e.g., modulated and encoded) by the DSP 158 and are then provided to the transmitter 152 for digital to analog conversion, frequency up conversion, filtering, amplification and transmission to the base station 140 (or other destination) via the transmit antenna 156.

In addition to processing communication signals, the DSP 158 provides for control of the receiver 150 and the transmitter 152. For example, gains applied to communication signals in the receiver 150 and the transmitter 152 may be adaptively controlled through automatic gain control algorithms implemented in the DSP 158.

In a data communication mode, a received signal, such as a text message or web page download, is processed by the communication subsystem 100 and is input to the microprocessor 18. The received signal is then further processed by the microprocessor 18 for an output to the display 16, or alternatively to some other auxiliary I/O devices 106. A device user may also compose data items, such as e-mail messages, using the keyboard 14 and/or some other auxiliary I/O device 106, such as a touchpad, a rocker switch, a thumb-wheel, or some other type of input device. The composed data items may then be transmitted over the communication network via the communication subsystem 100.

In a voice communication mode, overall operation of the device is substantially similar to the data communication mode, except that received signals are output to the audio receiver 109 or the speaker 110, and signals for transmission are generated by a microphone 112. Alternative voice or audio I/O subsystems, such as a voice message recording subsystem, may also be implemented on the device 10. In addition, the display 16 may also be utilized in voice communication mode, for example, to display the identity of a calling party, the duration of a voice call, or other voice call related information.

The short-range communications subsystem 102 enables communication between the mobile device 10 and other proximate systems or devices, which need not necessarily be similar devices. For example, the short-range communications subsystem may include an infrared device and associated circuits and components, or a Bluetooth™ communication module to provide for communication with similarly-enabled systems and devices.

In overview, based on a level of an aspect of the environment 15 of the mobile device 10 detected by the environment sensor 111, a state of the environment may be determined and an intensity of output provided at one of the output devices of the mobile device 10 may be selected corresponding to the determined state.

The Integrated Digital Enhanced Network (iDEN) is a Motorola Inc. enhanced specialized mobile radio network technology that combines two-way radio, telephone, text messaging and data transmission into one network. A mobile device 10 adapted to be used with iDEN technology typically includes the "hands-free" speaker 110 in addition to the "ear-oriented" audio receiver 109. Often, iDEN technology is used to dispatch (broadcast) instructions to an audience equipped with iDEN-capable mobile devices. The volume setting for the hands-free speaker 110 is typically user configurable. However, it has been noticed that the volume setting necessary to hear the hands-free speaker 110 when the mobile device 10 is resting in a holster attached at waist height is louder than necessary to hear the hands-free speaker 110 when the mobile device 10 is next to the head of the user, for example, when the user is initiating a telephone call. Furthermore, in a noisy environment (e.g., a construction site) the necessary in-holster volume setting may jeopardize acoustic safety, i.e., may damage the eardrum of the user if the hands-free speaker 110 produces sound when the mobile device 10 is next to the head of the user.

The mobile device 10, through the use of environment sensor 111, may determine whether the mobile device 10 is in a holster or out of the holster. Such determining may be implemented in numerous ways. For example, where the holster is provided with a permanent magnet in a predetermined location, the magnet becomes the aspect of the environment 15 to be sensed. The environment sensor 111 of the mobile device 10 may be a Hall Effect sensor or a reed switch. The Hall Effect sensor may be provided internal to the housing of the mobile device 10 in a location corresponding to the predetermined location of the permanent magnet in the holster. A Hall Effect sensor is capable of detecting the presence or absence of a magnetic field by developing a voltage as a result of current flow in the presence of a magnetic field. The reed switch may alternatively be provided internal to the housing of the mobile device 10 in a location corresponding to the predetermined location of the permanent magnet in the holster. A reed switch includes two magnetic contacts in a glass tube filled with protective gas and is capable of reacting to the presence of a magnetic field in that the two contacts become magnetized and attracted to each other when a magnet comes close, thereby allowing an electrical current to pass through the reed switch. Such combinations of a Hall Effect sensor or a reed switch in a mobile device and a permanent magnet in a holster may be used in disabling the display of the mobile device when the mobile device is in the holster.

In contrast to the single, user-configurable volume setting for the hands-free speaker 110, a mobile device 10 equipped with an environment sensor 111 may require that the user configure two volume settings: a first volume setting for use when the mobile device 10 is in the holster; and a second volume setting for use when the mobile device 10 is out of the holster.

While the automatic volume adjustment scheme presented hereinbefore may be arranged to toggle between two volumes settings based on a detected state of the environment 15, that is, the presence or absence of the holster, automatic volume adjustment may be expanded to include a plurality of discrete volume settings spread over a range of possible volume settings. The microphone 112 may be used as the environment sensor, in this embodiment, to detect an ambient noise level of the environment in which the mobile device 10 is being employed. According to a measured ambient noise level detected by the microphone 112 surpassing a threshold associated with a particular volume setting among the discrete volume settings, the volume may be automatically set to the particular volume setting. In such an implementation of automatic volume adjustment, the user may no longer have a capability to configure the volume level, but may, instead, have a capability to configure whether the automatic volume adjustment is enabled or disabled.

Rather than set the volume for a hands-free speaker 110, which may only be considered applicable to iDEN-capable mobile devices and equivalently hands-free speaker-equipped mobile devices, the present invention may apply to a wider range of mobile devices in that the volume of various notifications may be automatically adjusted. Such a notifications may, for instance, relate to an incoming call, a received page or a received Short Message Service (SMS) message, at the mobile device 10. Typically, notification is implemented on the mobile device 10 through the activation of an audio output device, among the set of auxiliary I/O devices 106, and consequential generation of a single tone, a series of tones (known as a ring tone), a vibration, a buzz or a polyphonic sound.

Without regard for the type (tone, vibration, buzz, polyphonic sound) of notification, the intensity of notification is often user-configurable. According to aspects of the present invention, where the environment is considered binary (e.g., in holster, out of holster), the user may be required to configure the intensity of notification for each of the two states. Alternatively, where the environment is considered continuous over a range (e.g., ambient noise) the user may be required to configure the automatic volume adjustment to be either enabled or disabled. As will be appreciated, even where the environment is considered continuous, the user may wish to configure binary volume adjustment wherein a first intensity is selected for a measured ambient noise level below a threshold value and a second intensity is selected for a measured ambient noise level equal to or exceeding the threshold.

It is known to use a light sensor (e.g., a photodiode) to determine an amount of back light to supply to a display on a mobile device. The same light sensor may be used as the environment sensor 111 to detect a state of an aspect of the environment 15 of the mobile device 10. For example, in absence of the combination of permanent magnet in the holster and corresponding Hall Effect sensor or reed switch, the light sensor may report to the microprocessor 18 a detected light level. The microprocessor 18 may, based on the reported light level, determine whether the state of the mobile device 10 is "in the holster" or "out of the holster" and, according to the detected state, select an intensity of notification.

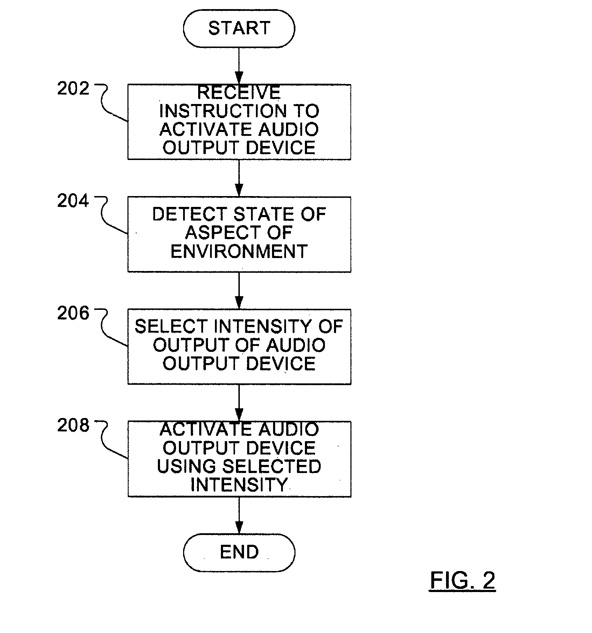

Steps of a method of automatically adjusting volume on an audio output device of the mobile device 10 are presented in FIG. 2. Such steps may be carried out at the microprocessor 18 according to the volume adjustment software module 130C loaded into the flash memory 116. Initially, an instruction to activate the audio output device is received (step 202). Responsive to receiving the instructions, the sensor is activated to detect (step 204) a level of the aspect of the environment of the mobile device 10 for which the environment sensor 111 is suited. Based on the detected state, a corresponding intensity is selected (step 206) for the audio output device and the audio device is activated (step 208) using the selected intensity.

As will be appreciated, the environment sensor 111 need not be only activated responsive to receipt of an instruction to active the audio output device. It may be that the environment sensor 111 may be periodically activated to monitor the state of the aspect of the environment of the mobile device 10 for which the environment sensor 111 is suited. The selection of intensity (step 206) may then rely on the state detected in the most recent activation of the environment sensor 111.

Additionally, in place of the environment sensor 111 may be a sensor system in which the environment sensor 11 1 is enhanced through the addition of a sensor controller. The sensor controller may interpret the level of the aspect of the environment 15 detected by the environment sensor 111 and, rather than reporting the detected level to the microprocessor 18 for interpretation, the sensor controller may interpret the level to determine the state of the aspect of the environment 15 and report the determined state to the microprocessor 18 for use in selecting a corresponding intensity.

Equally, the audio output device (e.g., the audio receiver 109, the speaker 110 or one of the auxiliary I/O devices 106) may be associated with an audio controller as an adjustment system alternative to the microprocessor 18. The task of the adjustment system being to select an audio output intensity corresponding to received information related to the state of the environment 15.

It is contemplated that a device may have multiple sensors in a sensor system for detecting a state of an environment. For instance, the device may have a microphone, a Hall Effect sensor and a light sensor together to automatically adjust display brightness and audio levels according to the sensed environment.

Other modifications will be apparent to those skilled in the art and, therefore, the invention is defined in the claims.

## Claims

1. A mobile communication device **characterized in that** it comprises:
an audio output device;
a sensor system for detecting a state of an environment of said communication device from among at least two states; and
an adjustment system for selecting an intensity of output for said audio output device based on said state detected by said sensor.

2. The mobile communication device of claim 1 further **characterized in that** said state detected by said sensor system relates to presence of a magnetic field.

3. The mobile communication device of claim 0 further **characterized in that** said sensor system comprises a Hall Effect sensor or a reed switch.

4. The mobile communication device of any one of claims 1 to 3 further **characterized in that** said audio output device is a hands-free speaker.

5. The mobile communication device of any one of claims 1 to 4 further **characterized in that** said sensor system comprises a microphone.

6. The mobile communication device of claim 5 further **characterized in that** said state detected by said sensor system relates to level of ambient noise.

7. The mobile communication device of any one of claims 1 to 4 further **characterized in that** said sensor system comprises a light sensor.

8. The mobile communication device of claim 7 further **characterized in that** said light sensor is a photodiode.

9. The mobile communication device of claim 8 further **characterized in that** said state detected by said sensor system relates to intensity of light received at said photodiode.

10. The mobile communication device of any one of claims 1 to 4 further **characterized in that** said sensor system comprises a controller and an environment sensor.

11. The mobile communication device of any one of claims 1 to 10 further **characterized in that** it comprises a communication subsystem for wireless communication with a base station of a communications network.

12. The mobile communication device of claim 0 further **characterized in that** said wireless communication uses an electromagnetic communication medium.

13. The mobile communication device of claim 0 further **characterized in that** said electromagnetic communication medium is restricted to radio frequencies.

14. A method of automatically adjusting intensity of output for an audio output device of a mobile communication device, said method **characterized in that** it comprises:
determining a state of an environment of said mobile communication device; and
based on said determining, selecting an intensity of output for said audio output device.

15. The method of claim 0 further **characterized in that** it comprises activating said audio output device with said selected intensity.

16. The method of claim 0 further **characterized in that** it comprises receiving an instruction to activate said audio output device and where said detecting is responsive to said receiving.

17. The method of any one of claims 14 to 16 further **characterized in that** said selecting comprises selecting from amongst at least two intensity levels.

18. The method of any one of claims 14 to 17 further **characterized in that** it comprises detecting a level of an aspect of an environment of said mobile communication device, wherein said determining is responsive to said detecting.

19. A computer readable medium containing computer-executable instructions **characterized in that**, when performed by processor in a mobile communication device including an audio output device, said computer-executable instructions cause said processor to perform the method of any of claims 14 to 18.

20. A mobile communication device **characterized in that** it comprises:
an audio output device;
a sensor system for detecting a level of an aspect of an environment of said communication device; and
an adjustment system for selecting an intensity of output for said audio output device based on said level detected by said sensor.

21. A method of setting an intensity of output for an audio output device of a mobile communication device, said method **characterized in that** it comprises:
detecting a level of an aspect of an environment of said communication device; and
selecting an intensity of output for said audio output device based on said level detected by said sensor.

22. The method of claim 21 further **characterized in that** it comprises interpreting said level detected by said sensor to determine a state of said environment from among at least two states.

23. A computer readable medium containing computer-executable instructions **characterized in that**, when performed by processor in a mobile communication device including an audio output device, said computer-executable instructions cause said processor to perform the method of claim 21 or 22.
